# EUROPÄISCHE PATENTANMELDUNG

(11) **EP 2 080 925 A1**
(43) Veröffentlichungstag der Anmeldung: **22.07.2009**
(21) Anmeldenummer: 09000127.2
(22) Anmeldetag: 08.01.2009
(51) Int. Cl.: F16D 65/12

(54) **Innenbelüftete Bremsscheibe**

(30) Priorität: 17.01.2008 DE 102008004805
(71) Anmelder: KNORR-BREMSE Systeme für Nutzfahrzeuge GmbH, 80809 München (DE)
(72) Erfinder: Pahle, Wolfgang, 83707 Bad Wiessee (DE)
(74) Vertreter: Mattusch, Gundula

(57) **Zusammenfassung**

Eine Innenbelüftete Bremsscheibe, mit zwei einen Scheibenkörper (1) bildenden, durch Verbindungsstege (5) miteinander verbundenen Reibringen (3, 4) und einem am Scheibenkörper (1) angeschlossenen, sich einseitig axial erstreckenden Hals (2), ist so ausgebildet, dass der dem Hals (2) zugewandte erste Reibring (3) dicker ist als der andere zweite Reibring und dass im gemeinsamen Verbindungsbereich erster Reibring (3)/Hals (2) eine umlaufende, die Dicke des ersten Reibringes (3) in diesem Bereich reduzierende Nut (7) vorgesehen ist, wobei die Tiefe der Nut (7) 20 % bis 30 % der Dicke des ersten Reibringes (3) entspricht.

## Beschreibung

Die Erfindung betrifft eine innenbelüftete Bremsscheibe nach dem Oberbegriff des Anspruchs 1.

Derartige Bremsscheiben, die sowohl in Pkws wie auch in Nutzfahrzeugen Verwendung finden, werden üblicherweise aus einem hochgekohlten Grauguss hergestellt, wobei der Hals und der Scheibenkörper einstückig ausgebildet sind.

Durch den hohen Kohlenstoffgehalt wird eine hohe Wärmeleitfähigkeit erzielt, die zu einer raschen Wärmeverteilung der beim Bremsen an den Reibflächen der Reibringe entstehenden Reibungswärme beiträgt.

Um einer wärmebedingten Festigkeitsabnahme des Scheibenkörpers entgegenzuwirken, ist es bekannt, den Guss mit Molybdän zu legieren, wodurch die Warmfestigkeit erhöht wird.

Mit dieser Maßnahme sollen Hitzerisse als Folgen lokaler Überhitzungen sowie Deformationen der Bremsscheibe wie ein sogenanntes Schirmen oder eine WellenVerformung verhindert werden.

Zu diesem Zweck sind auch konstruktive Lösungen bekannt, beispielsweise aus der DE 199 29 390 A1. Hierin ist vorgeschlagen, den Scheibenkörper auf den vorgefertigten Hals aufzugießen.

In der EP 1 522 755 A1 wird angeregt, den dem Hals abgewandten zweiten Reibring mit dem Hals einstückig auszubilden oder den Scheibenkörper symmetrisch in der Mitte am Hals anzuschließen.

Die Anbindung des zweiten Reibringes am Hals führt jedoch dazu, dass der Scheibenkörper nicht ausreichend innenbelüftet ist, so dass sich insbesondere bei der Verwendung in Rädern mit nach außen geschlossenen Felgen, beispielsweise Pkw-Stahlfelgen sowie Nutzfahrzeugfelgen, ein unzureichendes Abkühlverhalten der Bremsscheibe ergibt.

In der EP 1 227 261 B1 ist eine Bremsscheibe gezeigt und beschrieben, bei der der Scheibenkörper durch Stifte mit dem Hals verbunden ist. Allerdings sind solche mehrteiligen Lösungen erheblich teurer in der Herstellung als einteilige Bremsscheiben, so dass sie allein schon aus diesem Grund keine akzeptable Alternative bilden.

Daneben ist versucht worden, den durch Rissbildung gefährdeten Reibring möglichst steif auszuführen und so Deformationen zu verhindern. Dabei soll die zur Versteifung vorgesehene Aufdickung des Reibringes zu einer höheren Wärmekapazität führen, so dass Temperaturspitzen schneller abgebaut bzw. vermieden werden können. Teilweise wird die Verdickung der Reibringe auch nur im mittleren Bereich des Reibringes vorgenommen, da Hitzerisse überwiegend im Bereich der Reibflächenmitte entstehen.

Aus einer solchen Versteifung des Reibringes folgt jedoch eine nur bedingte, d.h. im Wesentlichen unterdrückte Wärmeausdehnung, die zu zusätzlichen Spannungen führt. Die Erhöhung der Warmfestigkeit ist daher bei diesen Lösungen nur durch die Zugabe von Molybdän möglich.

Die bekannten Bremsscheiben stellen daher allesamt nur unbefriedigende Lösungen dar, die einen optimierten Betrieb bzw. eine optimierte Standzeit der Bremsscheibe nicht zulassen.

Der Erfindung liegt die Aufgabe zugrunde, eine Bremsscheibe der gattungsgemäßen Art so weiterzuentwickeln, dass ihre Standzeit wesentlich erhöht wird, bei gleichzeitig einfacher und kostengünstiger Herstellung.

Diese Aufgabe wird durch eine Bremsscheibe mit den Merkmalen des Anspruchs 1 gelöst.

Durch diese konstruktive Ausbildung der Bremsscheibe wird erreicht, dass der Scheibenkörper an den besonders wärmebelasteten Bereichen ausreichend dimensioniert ist, um die erwähnten Deformierungen wie Schirm- oder Wellenbildungen zu verhindern. Gleichzeitig wird durch die Einbringung einer umlaufenden in ihrer Tiefe 20 % bis 30 % der Dicke des ersten Reibringes entsprechenden Nut im Übergangsbereich zwischen dem Hals und dem diesem zugewandten ersten Reibring eine flexible Anbindung des Scheibenkörpers am Hals erreicht, die unter anderem dazu führt, dass sich der gegenüber dem zweiten Reibring dickere erste Reibring bei Wärmeeinwirkung entsprechend ausdehnen kann, ohne dass Wärmerisse entstehen.

Natürlich ist die Wandung des ersten Reibringes im Bereich der umlaufenden Nut so dimensioniert, dass die auftretenden Bremsmomente im geforderten Umfang übertragen werden können. In jedem Fall ist die Nut, deren Tiefe die Wanddicke des ersten Reibringes bestimmt, so tief gehalten, dass das zulässige Verschleißmaß des ersten Reibringes kleiner ist.

Vorzugsweise beträgt die Nuttiefe etwa 23 % bis 25 % der Dicke des ersten Reibrings, die sich ausgehend von der Fläche bemisst, auf der die Verbindungsstege angesetzt sind.

Nach einem weiteren Gedanken der Erfindung ist vorgesehen, dass lediglich der erste Reibring mit dem Hals verbunden ist. Hierdurch liegen die durch die Verbindungsstege gebildeten Lüftungskanäle zwischen den beiden Reibringen radial nach innen frei, so dass die Bremsscheibe insgesamt ausreichend belüftet ist, auch wenn sie in Räder mit weitgehend geschlossenen Felgen eingebaut werden.

Die sich dadurch ergebende behinderungsfreie Kühlung der Bremsscheibe trägt ebenso zur Standzeitoptimierung bei wie die entsprechende Dickendimensionierung des ersten und besonders belasteten Reibringes und die Vermeidung der Deformationen durch die umlaufende Nut bzw. die Wandverschwächung im Anbindungsbereich des Scheibenkörpers am Hals.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Bremsscheibe in einer perspektivischen Ansicht
- Figur 2: einen Längsschnitt durch die Bremsscheibe
- Figur 3: einen Teilausschnitt aus der Bremsscheibe entsprechend III in Figur 2.

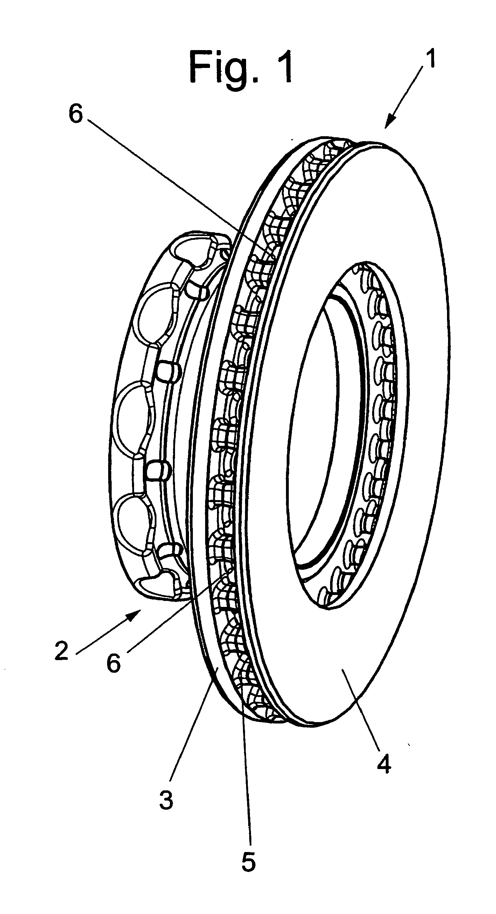

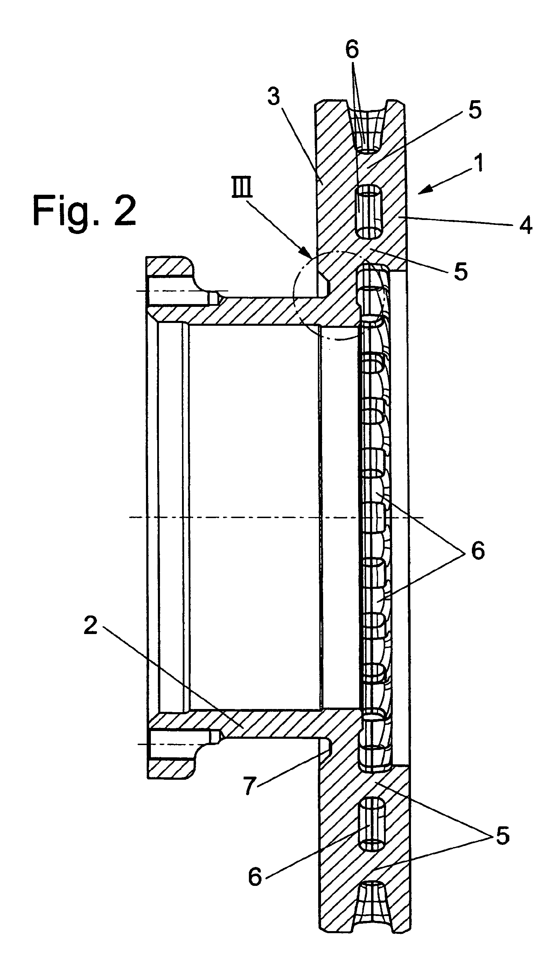

In den Figuren 1 und 2 ist eine Bremsscheibe dargestellt, mit zwei einen Scheibenkörper 1 bildenden, durch Verbindungsstege 5 miteinander verbundenen Reibringen 3, 4, zwischen denen durch die Verbindungsstege 5 definierte Kühlkanäle 6 gebildet sind.

An einen ersten Reibring 3 ist ein sich einseitig axial erstreckender Hals 2 angeformt, mit dem die Bremsscheibe 1 an einem Fahrzeugrad befestigbar ist.

Wie insbesondere in der Figur 2 sehr deutlich zu erkennen ist, ist der dem Hals 2 zugewandte erste Reibring 3 dicker als der zweite Reibring 4. Der Hals 2 ist dabei ausschließlich am ersten Reibring 3 angeschlossen, so dass die radial nach innen austretenden Kühlkanäle 6 frei liegen.

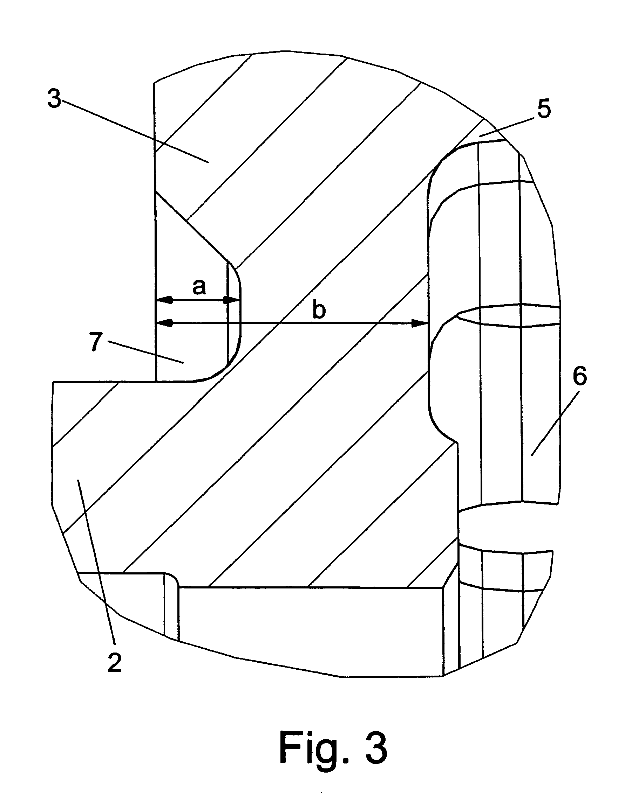

Im gemeinsamen Verbindungsbereich des ersten Reibringes 3 mit dem Hals 2 ist an der Außenseite des Reibringes 3 eine umlaufende Nut 7 vorgesehen, die in dem vergrößerten Ausschnitt der Figur 3 deutlich erkennbar ist.

Hier ist die Dicke des ersten Reibringes 3, ausgehend von der dem zweiten Reibring 4 zugewandten Fläche, auf der die Verbindungsstege 5 aufstehen, bis zu der dem Hals 2 zugewandten Außenseite mit b bezeichnet.

Die Tiefe der Nut 7 ist mit a angegeben, die 20 % bis 30 %, vorzugsweise 23 % bis 25 % der Dicke b beträgt.

## Patentansprüche

1. Innenbelüftete Bremsscheibe, mit zwei einen Scheibenkörper (1) bildenden, durch Verbindungsstege (5) miteinander verbundenen Reibringen (3, 4) und einem am Scheibenkörper (1) angeschlossenen, sich einseitig axial erstreckenden Hals (2), **dadurch gekennzeichnet, dass** der dem Hals (2) zugewandte erste Reibring (3) dicker ist als der andere zweite Reibring und dass im gemeinsamen Verbindungsbereich erster Reibring (3)/Hals (2) eine umlaufende, die Dicke des ersten Reibringes (3) in diesem Bereich reduzierende Nut (7) vorgesehen ist, wobei die Tiefe der Nut (7) 20 % bis 30 % der Dicke des ersten Reibringes (3) entspricht.

2. Bremsscheibe nach Anspruch 1, **dadurch gekennzeichnet, dass** die Tiefe der Nut (7) 23 % bis 25 % der Dicke des ersten Reibringes (3) entspricht.

3. Bremsscheibe nach Anspruch 1 oder 2, **dadurch gekennzeichnet, dass** die Nut (7) auf der dem Hals (2) zugewandten Außenseite des ersten Reibringes (3) vorgesehen ist.

4. Bremsscheibe nach einem der vorhergehenden Ansprüche, **dadurch gekennzeichnet, dass** die Nut (7) tiefer ist als das zulässige Verschleißmaß des ersten Reibringes (3).

5. Bremsscheibe nach einem der vorhergehenden Ansprüche, **dadurch gekennzeichnet, dass** der Hals (2) ausschließlich am ersten Reibring (3) angeformt ist.

6. Bremsscheibe nach einem der vorhergehenden Ansprüche, **dadurch gekennzeichnet, dass** zwischen den Verbindungsstegen (5) gebildete Kühlkanäle (6) radial von innen nach außen durchgehend offen sind.
